# EUROPÄISCHE PATENTSCHRIFT

(11) **EP 2 542 430 B1**
(45) Veröffentlichungstag und Bekanntmachung des Hinweises auf die Patenterteilung: **11.03.2020**
(21) Anmeldenummer: 10787340.8
(22) Anmeldetag: 23.11.2010
(51) Int. Cl.: B60C 11/03, B60C 11/04

(54) **FAHRZEUGLUFTREIFEN FÜR NUTZFAHRZEUGE**
TRUCK TIRE
PNEUMATIQUE POUR POIDS LOURDE

(30) Priorität: 04.03.2010 DE 102010000637
(43) Veröffentlichungstag der Anmeldung: 09.01.2013
(73) Patentinhaber: Continental Reifen Deutschland GmbH, 30165 Hannover (DE)
(72) Erfinder: KLEFFMANN, Jens, 30453 Hannover (DE); PETERS, Klaus, 31303 Burgdorf (DE); BUCHINGER-BARNSTORF, Thomas, 30974 Wennigsen (DE)
(74) Vertreter: Finger, Karsten
(86) Internationale Anmeldenummer: PCT/EP2010/067970
(87) Internationale Veröffentlichungsnummer: WO 2011/107171

(56) Entgegenhaltungen:
- WO-A1-2007/122252
- FR-A1- 2 534 858
- US-A- 6 003 576
- Good Year: "Nachschneide-Richtlinien"[Online] 15. Februar 2011 (2011-02-15), Seiten 33-44, XP002622551 Gefunden im Internet: URL:http://www.goodyear.eu/ch_de/images/Te chnisches%20Handbuch%20LKW-Reifen_Teil2_06 0222_tcm57-10686.pdf> [gefunden am 2011-02-15]

## Beschreibung

Die Erfindung betrifft einen Fahrzeugluftreifen für Nutzfahrzeuge mit einem Laufstreifen, welcher aus einem radial äußeren profilierten Bereich und einer radial innen an diesen profilierten Bereich angrenzenden Nachschneidreserve besteht und der profilierte Bereich ein bestimmtes Bruttovolumen aufweist,
- wobei der profilierte Bereich eine radiale Dicke aufweist und zumindest zwei in Umfangsrichtung verlaufende Umfangsrillen einer bestimmten radialen Tiefe aufweist, welche den profilierten Bereich in Umfangsrippen gliedern, wobei eine parallel zur Laufstreifenperipherie im Laufstreifen verlaufende, die tiefste(n) Umfangsrille(n) von radial innen berührende erste Einhüllende gemeinsam mit der Laufstreifenperipherie und den schulterseitigen Flankenabschnitten den profilierten Bereich definiert und wobei sämtliche Rillen im profilierten Bereich ein bestimmtes Rillenvolumen definieren,
- wobei die Nachschneidreserve eine radiale Dicke aufweist und wobei eine parallel zur Laufstreifenperipherie im Laufstreifen verlaufende, die Maximaltiefe nachschneidbare(n) Umfangsrille(n) von radial innen berührende zweite Einhüllende gemeinsam mit der ersten Einhüllenden und den schulterseitigen Flankenabschnitten die Nachschneidreserve definiert und
- wobei zwischen der Nachschneidreserve und dem radial innen gelegenen Gürtelpaket ein Gummirestpolster angeordnet ist,
- wobei die Nachschneidreserve eine radiale Dicke größer gleich 5 mm aufweist und
- wobei der profilierte Bereich eine radiale Dicke von 6 - 25 mm aufweist.

Es sind insbesondere LKW-Reifen bekannt, die durch die Anordnung einer Nachschneidreserve nachschneidbar sind, um die Kilometerleistung des Reifens zu erhöhen. Die Nachschneidreserve ist eine Gummischicht, welche radial innen an den profilierten Bereich angrenzt und in die die Profilgeometrie des weitgehend abgefahrenen profilierten Bereiches nachträglich eingeschnitten werden kann. Durch das Nachschneiden wird eine zusätzliche Profiltiefe zur Verfügung gestellt, die Kilometerlaufleistung des Reifens wird erhöht.

Der profilierte Bereich weist eine radiale Dicke und zumindest zwei in Umfangsrichtung verlaufende Umfangsrillen einer bestimmten radialen Tiefe auf, welche den profilierten Bereich in Umfangsrippen gliedern, wobei eine parallel zur Laufstreifenperipherie im Laufstreifen verlaufende, die tiefste(n) Umfangsrille(n) von radial innen berührende erste Einhüllende gemeinsam mit der Laufstreifenperipherie und den schulterseitigen Flankenabschnitten den profilierten Bereich definiert und wobei sämtliche Rillen im profilierten Bereich ein bestimmtes Rillenvolumen definieren. Die Nachschneidreserve weist eine radiale Dicke auf, wobei eine parallel zur Laufstreifenperipherie im Laufstreifen verlaufende, die maximaltief nachschneidbare(n) Umfangsrille(n) von radial innen berührende zweite Einhüllende gemeinsam mit der ersten Einhüllenden und den schulterseitigen Flankenabschnitten die Nachschneidreserve definiert.

Das Bruttovolumen des profilierten Bereiches ist durch das durch die erste Einhüllende, gemeinsam mit der Laufstreifenperipherie und den schulterseitigen Flankenabschnitten gebildete Volumen definiert.

Die maximale Nachschneidtiefe und somit die radiale Dicke der Nachschneidreserve ist die gesetzlich vorgeschriebene, vom Reifenhersteller anzugebene Nachschneidtiefenempfehlung bei nachschneidbaren Reifen.

Zwischen Nachschneidreserve und radial innen gelegenem Gürtelpaket ist ein Gummirestpolster angeordnet. Dieses Gummirestpolster wird auch "Grundpolster" genannt und gehört gemäß des Erfindungsgegenstandes nicht zur Nachschneidreserve. Das Gummirestpolster soll das Eindringen von Fremdkörpern in das Gürtelpaket und die Karkasse verhindern.

Es sind Nachschneideempfehlungen bis zu einer Tiefe von 4,5mm bekannt. Beispielsweise weist der Continental Nutzfahrzeugreifen HDR der Größe 11.00 R 22 eine empfohlene Nachschneidetiefe von 4,0 mm, der HSR der Größe 12.00 R 24 eine empfohlene Nachschneidetiefe von 2,5 mm und der HSR 11.00 R 22 eine empfohlene Nachschneidetiefe von 3,5 mm auf.

Um den Rollwiderstand von Fahrzeugluftreifen zu senken, ist bereits eine Vielzahl von Maßnahmen vorgeschlagen worden, beispielsweise eine Reduktion der Profiltiefe oder eine Verringerung der Laufstreifenbreite. Diese Maßnahmen zielen darauf ab, das beim Abrollen zu deformierende Gummivolumen zu reduzieren. Darüber hinaus verringern spezielle Laufstreifencompounds den Rollwiderstand, beispielsweise solche, die einen geringen Füllstoffanteil aufweisen.

Ein Nutzfahrzeugreifen eingangs genannter Art ist beispielsweise aus der FR 2 534 858 A1 bekannt. Der Nutzfahrzeugreifen weist einen Laufstreifen mit zumindest zwei Umfangsrillen mit in Draufsicht zick-zack-förmig verlaufenden Rillenkanten auf. Die in axialer Richtung ermittelte maximale Auslenkung der Rillenkanten gegenüber einer Rillenmittellinie beträgt beispielsweise 6,5 mm. Gemäß einem Ausführungsbeispiel weist der Laufstreifen vier Umfangsrillen mit einer Tiefe von 8,0 mm auf. Bei diesem Ausführungsbeispiel beträgt die Dicke des Laufstreifens - ermittelt zwischen der Laufstreifenperipherie und der äußersten Gürtellage - 13,0 mm, die erwähnte maximale Auslenkung der Rillenkanten beträgt 8,0 mm.

Aus der US 6 002 576 A ist ferner ein Nutzfahrzeugreifen bekannt, welcher einen Laufstreifen mit Rillen aufweist, die mit vom Rillengrund ausgehenden Einschnitten versehen sind. Die Tiefe der Einschnitte ist auf die Nachschneidreserve abgestimmt.

Die WO 2007/122252 A1 offenbart einen Nutzfahrzeugreifen mit einem Laufstreifen mit drei Umfangsrillen. Eine der Umfangsrillen verläuft im Reifenzenit, weist eine Breite von höchstens 15,0 mm und eine Tiefe von 10% bis 30% ihrer Breite auf. Ein solcher Laufstreifen soll gute Handlingeigenschaften ermöglichen und auch bei großer Last abriebbeständig sein.

Aus der JP-A-61037504 ist ein PKW-Reifen bekannt geworden, dessen Laufstreifen aus einem profilierten Bereich der radialen Dicke (a) und einer radial innen an diesen profilierten Bereich angrenzenden Nachschneidreserve der radialen Dicke (b) besteht. Die Profilierung weist eine maximale radiale Tiefe und somit eine Dicke (a) von 3 bis 5mm auf. Die Dicke des profilierten Bereichs und die Dicke der Nachschneidreserve stehen miteinander in folgender Beziehung: (a) + (b) = 1,5 bis 3 x (a). Durch die vorgenannte Laufstreifenkonstruktion soll eine hervorragende Seitenführung und Geräuschentwicklung des Reifens ermöglicht sein, während durch das Nachschneiden das Wasserdrainagevermögen und die Haftung des PKW-Reifens über dessen Lebensdauer erhalten bleiben soll. Über Maßnahmen zur Reduzierung des Rollwiderstandes schweigt sich diese Druckschrift aus.

Eine Vielzahl von veröffentlichten Patentanmeldungen und Patenten befasst sich mit dem Thema, den Rollwiderstand von Nutzfahrzeugreifen zu senken, um den Kraftstoffverbrauch eines Fahrzeuges zu reduzieren. So ist beispielsweise aus der EP 0 973 652 B1 ein Reifen für LKW-Antriebsräder bekannt, dessen Laufstreifen zur Verringerung des Rollwiderstandes in Blöcke gegliedert ist, welche von Schlitzen axial durchsetzt sind. Die Blöcke sind ferner durch Quernuten voneinander getrennt, welche jeweils mit weiteren Schlitzen versehen sind. Darüber hinaus ist eine Vielzahl von Längsschlitzen vorgesehen.

Der Erfindung liegt die Aufgabe zugrunde, den Rollwiderstand eines Nutzfahrzeugreifens wirkungsvoll durch einfache Maßnahmen zu senken, ohne dass negative Auswirkungen auf andere Laufstreifeneigenschaften sowie den Abrieb und die Lebenserwartung des Reifens zu erwarten sind.

Gelöst wird die gestellte Aufgabe erfindungsgemäß dadurch, dass das Rillenvolumen kleiner gleich 16% des Bruttovolumens des profilierten Bereiches ist.

Bei erfindungsgemäß ausgeführten Nutzfahrzeugreifen wird das Gummivolumen im Laufstreifen erhöht, während die radiale Dicke des Laufstreifens gegenüber den Laufstreifen des Standes der Technik in etwa gleich bleibt. Entgegen der bisherigen Meinung der Fachwelt wird überraschenderweise durch diese Erhöhung des Gummivolumens im Laufstreifen der Rollwiderstand merklich reduziert. Der Laufstreifen setzt sich aus dem profilierten Bereich und der Nachschneidreserve zusammen. Durch den kombinatorischen Effekt der kennzeichnenden Merkmale: das im Vergleich zum Stand der Technik geringe Rillenvolumen von kleiner gleich 16% bezogen auf das Bruttovolumen des profilierten Bereiches, die reduzierte radiale Dicke des profilierten Bereiches und die erhöhte radiale Dicke der Nachschneidreserve bei bekannter/gleichbleibender Dicke des Laufstreifens, ist das Gummivolumen des Laufstreifens erhöht. Dieses wirkt sich positiv auf den Rollwiderstand aus. Durch die beschriebenen Maßnahmen wird die Profilsteifigkeit in radialer Richtung derart erhöht, dass die Deformationsamplitude des Laufstreifens in einem Ausmaß reduziert wird, welches eine Überkompensation des zu erwartenden Effektes - Verschlechterung des Rollwiderstandes durch mehr vorhandenen Gummi -bewirkt. Der Rollwiderstand des Reifens ist somit geringer, wobei die gegenüber einem nach dem Stand der Technik ausgeführten Reifen erzielbare Reduktion des Rollwiderstandes signifikant sein kann, je nach Anteil des Rillenvolumens in Kombination mit der Dicke der Nachschneidreserve bei "gleichbleibender" Laufstreifengesamtdicke.

Bei PKW-Reifen ist der vorgenannte Effekt, nämlich Verringerung des Rollwiderstandes durch mehr Gummi, nicht zu erzielen.

Der Rollwiderstand des Nutzfahrzeugreifens ist verbessert, wenn die Nachschneidreserve eine Dicke (b) >= 0,6 x a, wenigstens aber 5mm aufweist.

Der Rollwiderstand des Nutzfahrzeugreifens ist weiterhin verbessert, wenn die Nachschneidreserve eine Dicke (b) >= 1 x a aufweist.

Der Rollwiderstand des Nutzfahrzeugreifens ist insbesondere dann noch weiterhin verbessert, wenn die Nachschneidreserve eine Dicke (b) >= 1,5 x a aufweist.

Vor allem die Ausführung der Umfangsrillen und deren Anzahl und radiale Tiefe beeinflusst die Größe des Rillenvolumens und somit das Rollwiderstands- und Laufleistungspotential. Grundsätzlich kann im Rahmen der Erfindung im Laufstreifen zumindest eine breite Umfangsrille angeordnet sein, deren Breite an der Laufstreifenperipherie zwischen 5 mm und 20 mm und deren Tiefe zwischen 6 mm und 25 mm beträgt. Des Weiteren kann gemäß der Erfindung im Laufstreifen grundsätzlich zumindest eine schmale Umfangsrille vorgesehen sein, deren Breite an oder nahe der Laufstreifenperipherie zwischen 0,5 mm und 3 mm und deren Tiefe ebenfalls zwischen 6 mm und 25 mm beträgt.

Auch die gestalterische Ausführung der Umfangsrillen wirkt sich auf das Rillenvolumen bzw. den Anteil des Rillenvolumens am Bruttovolumen aus. Die gestalterische bzw. geometrische Ausführung der Umfangsrillen beeinflusst viele wichtige Laufstreifeneigenschaften, beispielsweise das Wasserdrainagevermögen, das Abriebsverhalten, die Traktionseigenschaften, das Abrollgeräusch und dergleichen. Es ist daher wesentlich, die Umfangsrillen von ihrer Geometrie bzw. ihrem Querschnitt her derart auszuführen, dass sie einerseits den Anteil des Rillenvolumens am Bruttovolumen erfindungsgemäß gering halten und andererseits die erwünschten Laufstreifeneigenschaften sicherstellen.

Um das Rillenvolumen zu reduzieren, kann es günstig sein, die Umfangsrillen im Laufstreifen in unterschiedlichen Tiefen auszuführen.

Vorteilhaft ist es, wenn der Laufstreifen wenigstens einen Nachschneidindikator aufweist, welcher in einer Umfangsrille und/oder in einer Lateralrille angeordnet ist. Der Nachschneidindikator zeigt die maximale empfohlene Nachschneidetiefe an. Der Nachschneidindikator ist beispielsweise eine sich radial erstreckende Ausnehmung, deren Grund sich bis auf diejenige radiale Tiefe erstreckt, die der Nachschneideempfehlung entspricht. Der Nachschneidindikator kann beispielsweise punktuell oder über den Reifenumfang umlaufend angeordnet sein. Der Nachschneidindikator liefert keinen Beitrag zum Rillenvolumen.

Erfindungsgemäße Laufstreifen können in den Umfangsrippen Querrillen, Einschnitte und dergleichen aufweisen, deren "Luftvolumen" zum Rillenvolumen beiträgt.

Die Dicken des profilierten Bereiches und der Nachschneidreserve werden in radialer Richtung des Reifens gemessen.

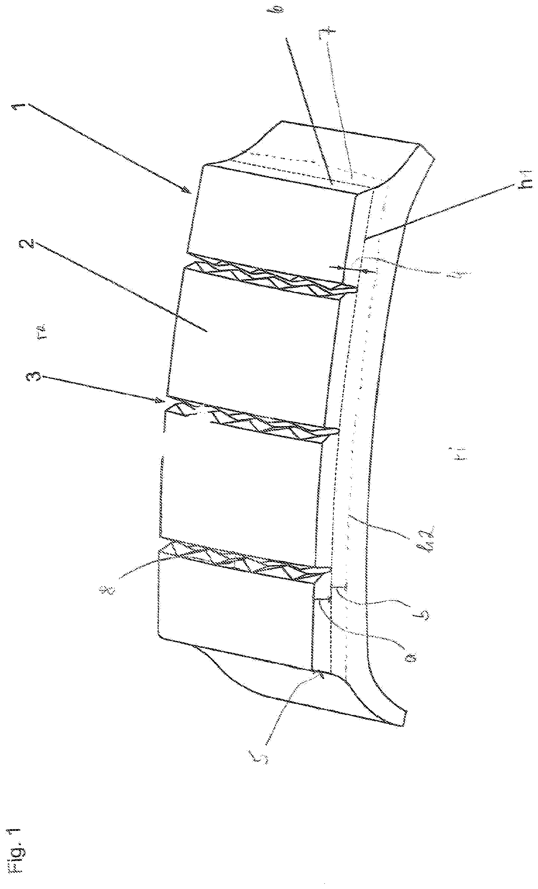

Weitere Merkmale, Vorteile und Einzelheiten der Erfindung werden nun anhand einer einzigen Zeichnung, die ein schematisches Ausführungsbeispiel darstellt, und einer Tabelle näher beschrieben. Dabei zeigt die Fig. 1 eine Ansicht einer Ausführungsform eines Laufstreifens eines erfindungsgemäßen Nutzfahrzeugreifens und die Tabelle zeigt gemessene Rollwiderstände von erfindungsgemäß ausgeführten Nutzfahrzeugreifen.

Die Erfindung befasst sich mit einer besonderen Ausführung von Laufstreifen für Nutzfahrzeugreifen, insbesondere LKW-, Bus- und Anhängerreifen. Erfindungsgemäß ausgeführte Reifen sind vorzugsweise für den Einsatz auf der Trailer- bzw. Nachlaufachse entsprechender Fahrzeuge konzipiert und können den üblichen Aufbau von Radialluftreifen für diese Einsatzzwecke aufweisen. Der Aufbau ist daher weder dargestellt noch beschrieben.

Die Fig. 1 zeigt einen Laufstreifen 1 eines NFZ-Neureifens, welcher aus einem radial äußeren, profilierten Bereich 6 der Dicke (a) und einer radial inneren Nachschneidreserve 7 der Dicke (b) besteht. Der profilierte Bereich 6 hat eine Dicke (a) von 12 mm und die Nachschneidreserve 7 eine Dicke (b) von 7 mm. Der profilierte Bereich 6 weist vier in Umfangsrichtung des Laufstreifens umlaufende Umfangsrippen 2 von im Wesentlichen übereinstimmender Breite auf. Die Umfangsrippen 2 sind voneinander durch in Umfangsrichtung umlaufende breite Umfangsrillen 3 getrennt, die sämtlich übereinstimmend ausgeführt sind. Die maximale Tiefe der breiten Umfangsrillen 3, die bei der gezeigten Ausführung für sämtliche Umfangsrillen 3 gleich groß gewählt ist, beträgt zwischen 6 mm und 25 mm, hier 12mm. Parallel zur Außenkontur der Laufstreifenperipherie sind zwei Hilfslinien h1 und h2 eingezeichnet. Die erste Hilfslinie h1 versinnbildlicht eine innerhalb des Laufstreifen 1 in Umfangsrichtung umlaufende Einhüllende h1, die die breiten Umfangsrillen 3 an ihren radial inneren Enden berührt und derart im Querschnitt parallel zur Laufstreifenperipherie in Umfangsrichtung innerhalb des Laufstreifens 1 verläuft. Die erste Hilfslinie h1 begrenzt den profilierten Bereich 6 nach radial innen zur Nachschneidreserve 7. Die zweite Hilfslinie h2 begrenzt die Nachschneidreserve 7 nach radial innen und verläuft parallel zur ersten Hilfslinie h1 und schließt zwischen sich und der Hilfslinie h1 die Nachschneidreserve 7 ein. Die durch die Hilfslinie h1 versinnbildlichte Einhüllende, die Laufstreifenperipherie und die schulterseitigen Flankenabschnitte 5 des Laufstreifens 1 umschließen ein Bruttovolumen des profilierten Bereiches V_{pB}, welches die Summe des hier befindlichen Gummivolumens und des Rillenvolumens V_{R} ist.

Bei einem erfindungsgemäß ausgeführten Reifen beträgt der Anteil des Rillenvolumens V_{R} am Bruttovolumen V_{pB} zwischen 1% und 16%, vorzugsweise maximal 10% und besonders bevorzugt zwischen 1% und 7%, insbesondere bevorzugt zwischen 1% und 4%, während die Nachschneidreserve eine Dicke (b) >= 0,4 x a, vorzugsweise (b) >= 0,6 x a, besonders bevorzugt (b) >= 1 x a, insbesondere bevorzugt (b) >= 1,5 x a, wenigstens aber 5 mm aufweist.

Die Tabelle zeigt gemessene Rollwiderstände von einem LKW-Referenzreifen mit einem Rollwiderstand von 100% und von erfindungsgemäß ausgeführten LKW-Reifen mit verbessertem Rollwiderstand.

**Tabelle**

| | Dicke des profilierten Bereiches (a) in mm | Nachschneidreserve (b) in mm | Verhältnis (b) zu (a) | Rollwiderstand nach ISO 28580 (%) |
|---|---|---|---|---|
| Referenz | 15 | 4 | (b) = 0,3 x (a) | 100 |
| Versuch 1 | 13,5 | 5,5 | (b) = 0,4 x (a) | 98,3 |
| Versuch 2 | 12 | 7 | (b) = 0,6 x (a) | 97,1 |
| Versuch 3 | 10,5 | 8,5 | (b) = 0,8 x (a) | 95,5 |
| Versuch 4 | 9 | 10 | (b) = 1,1 x (a) | 94 |
| Versuch 5 | 7,5 | 11,5 | (b) = 1,5 x (a) | 92,7 |
| Versuch 6 | 6 | 13 | (b) = 2,2 x (a) | 91,5 |

Der Referenzreifen und die erfindungsgemäßen LKW-Reifen weisen ein Rillenvolumen von 14% in Bezug auf das Bruttovolumen des profilierten Bereiches auf. Der Laufstreifen besteht aus einem profilierten Bereich mit drei in Umfangsrichtung verlaufenden Umfangsrillen.
Die Dicke des profilierten Bereiches entspricht der radialen Tiefe (a) der tiefsten Umfangsrillen, während die radiale Dicke der Nachschneidreserve (b) der vom Hersteller empfohlenen Nachschneidtiefe entspricht.

Der Referenzreifen weist eine Dicke des profilierten Bereiches (a) von 15mm und eine Nachschneidreserve (b) von 4 mm auf. Der Rollwiderstand des Referenzreifens beträgt 100%.

Aus der Tabelle wird deutlich, dass bei erfindungsgemäß ausgeführten LKW-Reifen der Rollwiderstand umso besser ist, je mehr Gummivolumen im Laufstreifen zur Verfügung gestellt wird. Eine Erhöhung der Dicke der Nachschneidreserve (b) bei entsprechender Reduzierung der Dicke des profilierten Bereiches (a) - also bei gleichbleibender Laufstreifendicke - ergibt ein größeres Gummivolumen im Laufstreifen und somit einen verbesserten Rollwiderstand. Je geringer die %-Angabe des Rollwiderstandes ist, umso besser ist der Rollwiderstand des LKW-Reifens.

### Bezugszeichenliste

- 1: Laufstreifen
- 2: Umfangsrippe
- 3: Umfangsrille
- 4: Tiefe der Umfangsrille
- 5: Flankenabschnitt
- 6: profilierter Bereich
- 7: Nachschneidreserve
- 8: Breite der Umfangsrille

- a: Dicke des profilierten Bereiches
- b: Dicke der Nachschneidreserve

- h1: erste Hilfslinie/ Einhüllende
- h2: zweite Hilfslinie/ Einhüllende

- ri: radial innen
- ra: radial außen

## Patentansprüche

1. Fahrzeugluftreifen für Nutzfahrzeuge mit einem Laufstreifen (1), welcher aus einem radial äußeren profilierten Bereich (6) und einer radial innen an diesen profilierten Bereich (6) angrenzenden Nachschneidreserve (7) besteht und der profilierte Bereich (6) ein bestimmtes Bruttovolumen (V_{pB})aufweist,
- wobei der profilierte Bereich (6) eine radiale Dicke (a) aufweist und zumindest zwei in Umfangsrichtung verlaufende Umfangsrillen (3) einer bestimmten radialen Tiefe (4) aufweist, welche den profilierten Bereich (6) in Umfangsrippen (2) gliedern, wobei eine parallel zur Laufstreifenperipherie im Laufstreifen (1) verlaufende, die tiefste(n) Umfangsrille(n) von radial innen berührende erste Einhüllende (h1) gemeinsam mit der Laufstreifenperipherie und den schulterseitigen Flankenabschnitten (5) den profilierten Bereich (6) definiert und wobei sämtliche Rillen (3) im profilierten Bereich (6) ein bestimmtes Rillenvolumen (V_{R}) definieren,
- wobei die Nachschneidreserve (7) eine radiale Dicke (b) aufweist und wobei eine parallel zur Laufstreifenperipherie im Laufstreifen (1) verlaufende, die maxialtief nachschneidbare(n) Umfangsrille(n) von radial innen berührende zweite Einhüllende (h2) gemeinsam mit der ersten Einhüllenden (h1) und den schulterseitigen Flankenabschnitten (5) die Nachschneidreserve (7) definiert und
- wobei zwischen der Nachschneidreserve und dem radial innen gelegenen Gürtelpaket ein Gummirestpolster angeordnet ist,
- wobei die Nachschneidreserve eine radiale Dicke (b) größer gleich 5 mm aufweist und
- wobei der profilierte Bereich (6) eine radiale Dicke (a) von 6 - 25 mm aufweist, **dadurch gekennzeichnet,**
**dass** das Rillenvolumen (V_{R}) kleiner gleich 16% des Bruttovolumens des profilierten Bereiches (V_{pB}) ist.

2. Fahrzeugluftreifen nach Anspruch 1, **dadurch gekennzeichnet, dass** der Anteil des Rillenvolumens (V_{R}) am Bruttovolumen des profilierten Bereiches (V_{pB}) bis zu 10% beträgt.

3. Fahrzeugluftreifen nach Anspruch 1, **dadurch gekennzeichnet, dass** der Anteil des Rillenvolumens (V_{R}) am Bruttovolumen des profilierten Bereiches (V_{pB}) bis zu 7% beträgt.

4. Fahrzeugluftreifen nach Anspruch 1, **dadurch gekennzeichnet, dass** der Anteil des Rillenvolumens (V_{R}) am Bruttovolumen des profilierten Bereiches (V_{pB}) bis zu 4% beträgt.

5. Fahrzeugluftreifen nach einem der Ansprüche 1-4, **dadurch gekennzeichnet, dass** der profilierte Bereich (6) eine radiale Dicke (a) von 6 - 13 mm aufweist

6. Fahrzeugluftreifen nach einem der Ansprüche 1-5, **dadurch gekennzeichnet, dass** die Nachschneidreserve (7) eine radiale Dicke (b) >= 0,4 x a aufweist, wobei die Dicke (b) mindestens 5mm ist.

7. Fahrzeugluftreifen nach einem der Ansprüche 1-5, **dadurch gekennzeichnet, dass** die Nachschneidreserve (7) eine radiale Dicke (b) >= 0,6 x a aufweist, wobei die Dicke (b) mindestens 5mm ist.

8. Fahrzeugluftreifen nach einem der Ansprüche 1-5, **dadurch gekennzeichnet, dass** die Nachschneidreserve (7) eine radiale Dicke (b) >= 1 x a aufweist.

9. Fahrzeugluftreifen nach einem der Ansprüche 1-5, **dadurch gekennzeichnet, dass** die Nachschneidreserve (7) eine radiale Dicke (b) >= 1,5 x a aufweist.

10. Fahrzeugluftreifen nach einem der Ansprüche 1 bis 9, **dadurch gekennzeichnet, dass** der profilierte Bereich (6) zumindest eine breite Umfangsrille (3) aufweist, deren Breite an der Laufstreifenperipherie zwischen 5 mm und 20 mm und deren Tiefe (4) zwischen 6 mm und 25 mm beträgt.

11. Fahrzeugluftreifen nach einem der Ansprüche 1 bis 10, **dadurch gekennzeichnet, dass** der profilierte Bereich (6) zumindest eine schmale Umfangsrille aufweist, deren Breite an oder nahe der Laufstreifenperipherie zwischen 0,5 mm und 3mm und deren Tiefe (4) zwischen 6 mm und 25 mm beträgt.

12. Fahrzeugluftreifen nach einem der Ansprüche 1 bis 11, **dadurch gekennzeichnet, dass** der Laufstreifen (1) wenigstens einen Nachschneidindikator aufweist, welcher in einer Umfangsrille und/oder in einer Lateralrille angeordnet ist.

## Claims

1. Vehicle pneumatic tire for utility vehicles, having a tread (1) which is composed of a radially outer, profiled region (6) and a trimming margin (7) which adjoins this profiled region (6) radially on the inside and the profiled region (6) has a certain gross volume (V_{pB}),
- wherein the profiled region (6) has a radial thickness (a) and at least two circumferential grooves (3), running in the circumferential direction, of a certain radial depth (4), which circumferential grooves (3) divide the profiled region (6) into circumferential ribs (2), wherein a first envelope (h1) which runs in the tread (1), parallel to the tread periphery, and which is in contact with the deepest circumferential groove or grooves radially from the inside, defines the profiled region (6) together with the tread periphery and the shoulder-side edge sections (5), and wherein all the grooves (3) define a certain groove volume (V_{R}) in the profiled region (6),
- wherein the trimming margin (7) has a radial thickness (b), and wherein a second envelope (h2), which runs in the tread (1), parallel to the tread periphery, and is in contact with the most deeply trimmable circumferential groove or grooves radially from the inside, defines the trimming margin (7) together with the first envelope (h1) and the shoulder-side edge sections (5), and
- wherein a rubber rest cushion is arranged between the trimming margin and the belt package placed radially on the inside,
- wherein the trimming margin has a radial thickness (b) of more than or equal to 5 mm and
- wherein the profiled region (6) has a radial thickness (a) of 6 - 25 mm,
**characterized**
**in that** the groove volume (V_{R}) is less than or equal to 16% of the gross volume of the profiled region (V_{pB}).

2. Vehicle pneumatic tire according to Claim 1, **characterized in that** the proportion of the gross volume of the profiled region (V_{pB}) which is formed by the groove volume (V_{R}) is up to 10%.

3. Vehicle pneumatic tire according to Claim 1, **characterized in that** the proportion of the gross volume of the profiled region (V_{pB})which is formed by the groove volume (V_{R}) is up to 7%.

4. Vehicle pneumatic tire according to Claim 1, **characterized in that** the proportion of the gross volume of the profiled region (V_{pB}) which is formed by the groove volume (V_{R}) is up to 4%.

5. Vehicle pneumatic tire according to one of Claims 1-4, **characterized in that** the profiled region (6) has a radial thickness (a) of 6 - 13 mm.

6. Vehicle pneumatic tire according to one of Claims 1 - 5, **characterized in that** the trimming margin (7) has a radial thickness (b) > = 0.4 x a, wherein the thickness (b) is at least 5 mm.

7. Vehicle pneumatic tire according to one of Claims 1 - 5, **characterized in that** the trimming margin (7) has a radial thickness (b) > = 0.6 x a, wherein the thickness (b) is at least 5 mm.

8. Vehicle pneumatic tire according to one of Claims 1 - 5, **characterized in that** the trimming margin (7) has a radial thickness (b) > = 1 x a.

9. Vehicle pneumatic tire according to one of Claims 1 - 5, **characterized in that** the trimming margin (7) has a radial thickness (b) > = 1.5 x a.

10. Vehicle pneumatic tire according to one of Claims 1 to 9, **characterized in that** the profiled region (6) has at least one wide circumferential groove (3) whose width at the tread periphery is between 5 mm and 20 mm and whose depth (4) is between 6 mm and 25 mm.

11. Vehicle pneumatic tire according to one of Claims 1 to 10, **characterized in that** the profiled region (6) has at least one narrow circumferential groove whose width at or near to the tread periphery is between 0.5 mm and 3 mm and whose depth (4) is between 6 mm and 25 mm.

12. Vehicle pneumatic tire according to one of Claims 1 to 11, **characterized in that** the tread (1) has at least one trimming indicator which is arranged in a circumferential groove and/or in a lateral groove.

## Revendications

1. Pneumatique pour véhicules utilitaires, comportant une bande de roulement (1), laquelle est constituée d'une région profilée (6) radialement extérieure et d'une réserve de retaillage (7) adjacente de manière radialement intérieure à cette région profilée (6) et la région profilée (6) présentant un volume brut déterminé (V_{pB}),
- dans lequel la région profilée (6) présente une épaisseur radiale (a) et comprend au moins deux rainures périphériques (3) s'étendant dans la direction périphérique et présentant une profondeur radiale déterminée (4), lesquelles divisent la région profilée (6) en nervures périphériques (2), dans lequel une première enveloppe (h1) s'étendant dans la bande de roulement (1) parallèlement à la périphérie de bande de roulement et en contact radialement depuis l'intérieur avec la/les rainure(s) périphériques la/les plus profonde(s) définit, conjointement avec la périphérie de bande de roulement et les parties de flanc (5) côté épaulement, la région profilée (6), et dans lequel toutes les rainures (3) dans la région profilée (6) définissent un volume de rainure déterminé (V_{R}),
- dans lequel la réserve de retaillage (7) présente une épaisseur radiale (b), et dans lequel une deuxième enveloppe (h2) s'étendant dans la bande de roulement (1) parallèlement à la périphérie de bande de roulement et en contact radialement depuis l'intérieur avec la/les rainure(s) périphérique(s) retaillable(s) sur une profondeur maximale définit, conjointement avec la première enveloppe (h1) et les parties de flanc (5) côté épaulement, la réserve de retaillage (7) et
- dans lequel un tampon résiduel en caoutchouc est disposé entre la réserve de retaillage et l'ensemble de ceinture situé radialement à l'intérieur,
- dans lequel la réserve de retaillage présente une épaisseur radiale (b) supérieure ou égale à 5 mm et
- dans lequel la région profilée (6) présente une épaisseur radiale (a) de 6 à 25 mm,
**caractérisé en ce que**
le volume de rainure (V_{R}) est inférieur ou égal à 16% du volume brut de la région profilée (V_{pB}).

2. Pneumatique de véhicule selon la revendication 1, **caractérisé en ce que** la part du volume de rainure (V_{R}) dans le volume brut de la région profilée (V_{pB})est de jusqu'à 10%.

3. Pneumatique de véhicule selon la revendication 1, **caractérisé en ce que** la part du volume de rainure (V_{R}) dans le volume brut de la région profilée (V_{pB})est de jusqu'à 7%.

4. Pneumatique de véhicule selon la revendication 1, **caractérisé en ce que** la part du volume de rainure (V_{R}) dans le volume brut de la région profilée (V_{pB})est de jusqu'à 4%.

5. Pneumatique de véhicule selon l'une des revendications 1 à 4, **caractérisé en ce que** la région profilée (6) présente une épaisseur radiale (a) de 6 à 13 mm.

6. Pneumatique de véhicule selon l'une des revendications 1 à 5, **caractérisé en ce que** la réserve de retaillage (7) présente une épaisseur radiale (b) >= 0,4 x a, l'épaisseur (b) étant d'au moins 5 mm.

7. Pneumatique de véhicule selon l'une des revendications 1 à 5, **caractérisé en ce que** la réserve de retaillage (7) présente une épaisseur radiale (b) >= 0,6 x a, l'épaisseur (b) étant d'au moins 5 mm.

8. Pneumatique de véhicule selon l'une des revendications 1 à 5, **caractérisé en ce que** la réserve de retaillage (7) présente une épaisseur radiale (b) >= 1 x a.

9. Pneumatique de véhicule selon l'une des revendications 1 à 5, **caractérisé en ce que** la réserve de retaillage (7) présente une épaisseur radiale (b) >= 1,5 x a.

10. Pneumatique de véhicule selon l'une des revendications 1 à 9, **caractérisé en ce que** la région profilée (6) comprend au moins une rainure périphérique large (3) dont la largeur au niveau de la périphérie de bande de roulement est comprise entre 5 mm et 20 mm et dont la profondeur (4) est comprise entre 6 mm et 25 mm.

11. Pneumatique de véhicule selon l'une des revendications 1 à 10, **caractérisé en ce que** la région profilée (6) comprend au moins une rainure périphérique étroite dont la largeur au niveau de la périphérie de bande de roulement ou près de cette périphérie est comprise entre 0,5 mm et 3 mm et dont la profondeur (4) est comprise entre 6 mm et 25 mm.

12. Pneumatique de véhicule selon l'une des revendications 1 à 11, **caractérisé en ce que** la bande de roulement (1) comprend au moins un indicateur de retaillage, lequel est disposé dans une rainure périphérique et/ou dans une rainure latérale.
